# EUROPÄISCHE PATENTSCHRIFT

(11) **EP 1 619 005 B1**
(45) Veröffentlichungstag und Bekanntmachung des Hinweises auf die Patenterteilung: **24.02.2016**
(21) Anmeldenummer: 05013203.4
(22) Anmeldetag: 18.06.2005
(51) Int. Cl.: F24D 3/14, B28B 23/00, B28B 23/02

(54) **Verfahren zur Herstellung eines vorgefertigten mit Stabstahl bewehrten Decken- oder Wandelements und Halteschiene zur Verwendung bei solchem Verfahren**
Manufacturing process for a prefabricated slab or wall with reinforcing steel bars and support rail adapted to such process
Procédé de fabrication d'un mur ou plafond préfabriqué renforcé avec des barres en acier et rail de support utilisé dans un tel procédé

(30) Priorität: 22.07.2004 DE 102004035580
(43) Veröffentlichungstag der Anmeldung: 25.01.2006
(73) Patentinhaber: REHAU AG + Co, 95111 Rehau (DE)
(72) Erfinder: Kübler, Rainer, Ross-on-Wye, Herefordshire HR9 5RD (GB)

(56) Entgegenhaltungen:
- EP-A- 0 385 148
- EP-A- 1 361 396
- EP-A1- 0 209 618
- EP-A1- 1 456 485
- WO-A-02/077384
- DE-A1- 3 032 958
- DE-A1- 3 525 347
- DE-A1- 10 001 839
- DE-A1- 10 156 641
- DE-A1- 19 848 561
- DE-C1- 19 930 693
- DE-U1- 8 006 327
- DE-U1- 20 022 421
- DE-U1- 29 613 299

## Beschreibung

Die Erfindung betrifft ein Verfahren zur Herstellung eines vorgefertigten mit Stabstahl bewehrten Bauelements, insbesondere eines Decken- oder Wandelements, mit wenigstens einer Rohrleitung zur Raumtemperierung. Daneben betrifft die Erfindung eine Halteschiene, die zur Verwendung bei einem Verfahren dieser Art ausgebildet ist.

Die DE 80 06 327 U1 beschreibt ein Verfahren mit den Merkmalen des Oberbegriffs des Patentanspruchs 1 und eine Halteschiene mit den Merkmalen des Oberbegriffs des Patentanspruchs 7.

Insbesondere bei Gewerbebauten, aber auch im Wohnungsbau ist es mehr und mehr üblich, Decken und Wände mit Rohrleitungen zur Raumtemperierung, sei es zur Heizung oder Kühlung, zu verwenden. Aus Zeit- und Kostengründen werden heute auf Baustellen sehr oft Fertig- oder Halbfertigteile eingesetzt.

Soll ein Halbfertigteil mit Rohrleitungen versehen werden, durch die hinterher die Kühl- bzw. Heizflüssigkeit fließen soll, so besteht zum einen die Möglichkeit, diese Rohrleitungen im Betonwerk vor Ort manuell einzulegen. Dazu ist jedoch ein hoher Zeitaufwand nötig, und es besteht weiterhin das Problem, dass das manuelle Einlegen der Rohrleitungen sich nur schwer in den teilweise vollautomatischen Fertigungsprozess im Betonwerk integrieren lässt. Zudem lässt sich der Verlegeabstand der Rohrleitungen nur unzureichend sichern.

Aus der DE 198 48 561 A1 ist ein Verfahren bekannt, bei dem ein Rohrregister mit einer statisch tragenden Bewehrungsmatte in ein bewehrtes Betonhalbfertigteil integriert wird. Dieses Verfahren beruht jedoch auf der Verwendung von Bewehrungsmatten, die im Vergleich zu Stabstahl mit einem höheren Fertigungs- und Kostenaufwand verbunden sind. Daneben ist der logistische Aufwand wesentlich höher als bei der Verwendung von Stabstahl, beispielsweise bei der Planung, der Mattenproduktion, beim Transport zum Fertigungsort und beim Einbau. Zudem besteht wiederum das Problem der schwierigen Integrierbarkeit des Verfahrens bei einer vollautomatischen Fertigung in Betonwerken. Deshalb ist es aus wirtschaftlichen Gründen von Vorteil, bei der Fertigung von Decken- und Wandelementen Stabstahlbewehrungen einzusetzen.

Aus der DE 30 32 958 A1 ist ein Abstandhalter für eine mit Heizelementen zu versehende Trägermatte mit einer Rohrbefestigungsschelle auf einem plattenförmigen Fuß bekannt, dessen Basis zwei sich kreuzende Einlegenuten für Stäbe der Trägermatte aufweist

Der Erfindung liegt damit die Aufgabe zugrunde, ein Verfahren zur Herstellung eines vorgefertigten mit Stabstahl bewehrten Bauelements der eingangs genannten Art anzugeben, das eine verbesserte Verlegung von Rohrleitungen vor Ort in Betonwerken ermöglicht, wobei die Position von Clipvorrichtungen an die gewünschte Rohrverlegung angepasst werden kann. Zur Lösung dieser Aufgabe ist erfindungsgemäß ein Verfahren gemäss Anspruch 1.

Bei diesem Verfahren wird zunächst die statisch notwendige Bewehrung für ein Decken- oder Wandelement od. dgl. mittels Stabstahl manuell oder vollautomatisch in der Produktionspalette erstellt. Danach wird eine Halte- oder Befestigungsschiene eingebracht und an der statisch notwendigen Bewehrung gehaltert, wobei in der Regel mehrere solcher Schienen in verteilter Anordnung je nach Verlegemuster der Rohrleitungen eingebracht werden. Die Schiene dient zur Aufnahme der für die Raumtemperierung erforderlichen Rohrleitungen, nach deren Einbringen und Halterung schließlich der Verguss des Bauelements mit Beton erfolgen kann. Anschließend wird das vorgefertigte Bauelement aus dem Betonwerk auf die Baustelle transportiert, wo die Montage der Decken- oder Wandelemente erfolgt. Auf der Baustelle wird die obere Bewehrung aufgebracht, wonach abschließend das gesamte Element mit Beton vergossen wird.

Es ist vorteilhaft, wenn die Rohrleitung an der Halteschiene clipgehaltert wird. Durch das Einclipsen ist die Rohrleitung zum einen schnell und sicher gehaltert, zum anderen kann damit ein definierter Verlegeabstand gewährleistet werden. Zweckmäßigerweise liegt die in das zu fertigende Bauelement eingebrachte Rohrleitung höher als die Stabstahlbewehrung. Damit bleibt der prinzipielle Aufbau beispielsweise einer Elementdecke unverändert, während eine näherungsweise gleichmäßige Temperierung in unterschiedliche Richtungen gewährleistet werden kann.

Die Stabstahlbewehrung wird üblicherweise mit einer Längs- und einer Querbewehrung erstellt. Nach einer ersten Ausbildung des erfindungsgemäßen Verfahrens ist vorgesehen, dass Gitterträger verwendet werden, die vor der Halteschiene in das Bauelement eingebracht werden. Dies ist in der Regel bei einem vollautomatischen Fertigungsprozess im Betonwerk der Fall. Dann werden die Quer- und Längsbewehrung sowie die Gitterträger in einem Arbeitsschritt direkt nacheinander eingebracht.

Alternativ ist es auch möglich, dass Gitterträger verwendet werden, die nach der Halteschiene in das Bauelement eingebracht werden. Diese Möglichkeit besteht bei einer halbautomatischen oder manuellen Fertigung.

Damit bietet das erfindungsgemäße Verfahren den Vorteil, dass das Bauelement mit der Raumtemperierungsfunktion zum einen problemlos in einem vollautomatischen Betonwerk gefertigt werden kann, zum anderen aber Variationsmöglichkeiten gegeben sind, die bei einer halbautomatischen oder manuellen Fertigung von Vorteil sein können.

Weiterhin kann vorgesehen sein, dass die Halteschiene an der Längsbewehrung und/oder an den Untergurten der Gitterträger gehaltert wird. Damit kann ein Verrutschen dieser Bauteile gegeneinander verhindert werden und das gesamte Bauelement erhält zusätzliche Stabilität. Bei einem vollautomatischen Fertigungsprozess, bei dem die Stabstahlbewehrung und die Gitterträger direkt nacheinander eingebracht werden, ist eine Halterung zumindest an den Untergurten der Gitterträger, gegebenenfalls auch an der Längsbewehrung, problemlos möglich. Werden die Gitterträger erst nach der Halteschiene eingebracht, zum Beispiel bei einem manuellen Fertigungsprozess, so empfiehlt sich eine Halterung nur an der Längsbewehrung.

Die Halteschiene beim erfindungsgemäßen Verfahren kann kraftschlüssig an der Bewehrung und/oder an den Untergurten der Gitterträger gehaltert werden. Besonders vorteilhaft ist eine Cliphalterung der Halteschiene an der Bewehrung und/oder den Untergurten der Gitterträger, sodass definierte Abstände zwischen Schiene, Bewehrung und Gitterträgern gesichert werden können.

Eine Ausgestaltung des erfindungsgemäßen Verfahrens sieht vor, dass die Rohrleitung oder die Rohrleitungen an der Stabstahlbewehrung befestigt werden.
Dies kann zum Beispiel kraftschlüssig erfolgen. Beispielsweise können Kabelbinder oder Drähte verwendet werden. Die Rohrleitungen werden in der Regel in Windungen derart verlegt, dass sie in der Fläche des Bauelements parallel verlaufen, während im Randbereich die Umlenkung erfolgt. Um die Rohrleitung gegen Aufschwimmen zu sichern, ist insbesondere im Umlenkbereich eine Fixierung an der Bewehrung erforderlich. Durch weitere Fixierungen in den parallelen Abschnitten kann zusätzlich ein Verrutschen verhindert werden.

Erfindungsgemäß kann vorgesehen sein, dass die Halteschiene quer, insbesondere senkrecht, zur Längsbewehrung eingebracht wird. Dies ist sinnvoll, da die Längsbewehrung in der Regel auf der Querbewehrung aufliegt, sodass bei dem nachfolgenden Einbringen der Halteschiene die Orientierung an der Längsbewehrung und auch die Halterung an der Längsbewehrung von Vorteil ist.

Erfindungsgemäß kann zunächst die Halteschiene auf der Schalung aufgestellt werden. Erst dann erfolgt das Erstellen der notwendigen Bewehrung. Die Rohrleitung wird anschließend wiederum an der Halteschiene gehaltert und schließlich das Bauelement mit Beton vergossen. Bei diesem Verfahren kann die Halteschiene zusätzlich als Abstandshalter der unteren Bewehrung dienen. Dadurch, dass die statische Bewehrung auf der Schiene aufliegt, wird ein Verrücken der Schiene verhindert.

Eine erste Ausgestaltung dieses Verfahrens sieht vor, dass Gitterträger verwendet werden, die vor der Rohrleitung eingebracht werden. Dies entspräche dem Vorgehen bei einem vollautomatischen Fertigungsprozess, bei dem Quer-, Längsbewehrung und Gitterträger direkt nacheinander in einem Arbeitsschritt eingebracht werden.
Alternativ ist es wiederum möglich, dass Gitterträger verwendet werden, die nach der Rohrleitung eingebracht werden, beispielsweise bei einem halbautomatischen oder manuellen Verfahren. Vorteilhafterweise wird die Rohrleitung an der Halteschiene clipgehaltert. So ist eine schnelle Rohrverlegung mit einem gesicherten Verlegeabstand gewährleistet.

Je nach Ausbildung der Halteschiene kann die Rohrleitung bei eingebrachter Halteschiene höher liegen als die Stabstahlbewehrung; daneben kann eine Befestigung der Rohrleitung an der Stabstahlbewehrung, die beispielsweise kraftschlüssig erfolgt, von Vorteil sein. Im Umlenkbereich ist ein solches Fixieren der Rohrleitungen an der statischen Bewehrung im Allgemeinen erforderlich, beispielsweise ein Fixieren durch Kabelbinder, um ein Verrutschen zu verhindern. Bei einem entsprechend gewählten Verlegeabstand der Halteschienen ist dagegen ein Fixieren der Rohrleitung in Längsrichtung, also in den parallel liegenden Abschnitten, nur punktuell oder gar nicht erforderlich.

Zusammenfassend ermöglicht das erfindungsgemäße Verfahren eine wirtschaftliche Fertigung eines vorgefertigten Bauelements mit Rohrleitungen zur Raumtemperierung, bei dem gleichzeitig ein gesicherter Verlegeabstand der Rohleitungen gewährleistet ist.

Daneben betrifft die Erfindung eine Halteschiene mit den Merkmalen des Anspruchs 7.

Auf ihrer Unterseite können Vorrichtungen zur Halterung an der Bewehrung, insbesondere Clipvorrichtungen vorhanden sein aufweist.

Die Bezeichnungen Ober-/Unterseite beziehen sich hierbei auf die in die Produktionspalette eingebrachte Halteschiene.
Hier befinden sich die Vorrichtungshalterungen an entgegengesetzten Seiten der Schiene, wodurch die Rohrleitung beim fertigen Bauelement höher zu liegen kommt als die statische Bewehrung.

Die Halteschiene kann außerdem auf ihrer Unterseite Vorrichtungen zur Halterung der Gitterträger, insbesondere Clipvorrichtungen, aufweisen. Dies ist in dem Fall von Vorteil, bei dem die Quer-, Längsbewehrung und die Gitterträger direkt aufeinanderfolgend und vor der Halteschiene eingebracht werden. Dann kann die Schiene nicht nur an der Längsbewehrung, sondern zusätzlich auch an den Gitterträgern eingeclipst werden, wodurch alle Bauteile zueinander eine feste Lage erhalten.

Werden die Gitterträger nach der Halteschiene eingebracht, so weist die Halteschiene sinnvollerweise auf ihrer Oberseite eine Auflagefläche für Gitterträger auf. Diese Auflagefläche kann gegenüber der sonstigen Schienenfläche abgesenkt sein, sodass sie sich auf Höhe der Querbewehrung oder direkt über der Querbewehrung befindet. Vorzugsweise stehen die Untergurte der Gitterträger in der Ebene der Längsbewehrung. Damit kann das nachträgliche Einbringen der Gitterträger problemlos vorgenommen werden.

Damit die Werkzeugkosten zur Herstellung der Halteschiene sich in einem wirtschaftlichen Rahmen bewegen, ist es sinnvoll, Halteschienen mit einer Länge von etwa 1 Meter zu verwenden. Dies hat zusätzlich den Vorteil, dass in dem Fall, in dem die Gitterträger vor der Halteschiene eingebracht werden, ein leichtes Einfädeln der Halteschiene in die Gitterträger möglich wird.

Die erfindungsgemäße Halteschiene aufweist auf ihrer Oberseite Clipvorrichtungen zur Halterung der Rohrleitung und kann eine Auflagefläche für die Bewehrung aufweisen.

Diese Schiene eignet sich damit zum Aufstellen auf der Schalung, bei der zunächst die Stabstahlbewehrung aufgelegt wird, bevor die Rohrleitung in den Clipvorrichtungen, ebenfalls auf der Oberseite der Schiene, gehaltert wird. Diese Clipvorrichtungen ragen zweckmäßigerweise über die Fläche der Schiene hinaus, sodass die Rohrleitung höher liegt als die Bewehrung.

Die Halteschiene ist erfindungsgemäß ein U-Profil mit Aussparungen in longitudinaler Richtung. Diese Aussparungen können beliebig, z. B. halbkreisförmig, oval oder auch kreisförmig ausgebildet sein. Dabei ist darauf zu achten, dass das Aufstellen der Schiene durch die Aussparungen nicht beeinträchtigt wird. Die Schiene soll bei hinreichender Stabilität nicht zu viel Material umfassen.

In diesem Sinne ist bei allen erfindungsgemäßen Halteschienen eine filigrane Bauweise von Vorteil. Die Halteschiene soll fein und mit wenig Material so ausgebildet sein, dass sie beim Vergießen des Elements mit Beton nicht störend wirkt und die gleichmäßige Verteilung des Betons nicht beeinträchtigt. Eine solche Ausbildung lässt sich besonders gut mit Kunststoffschienen realisieren.

Die erfindungsgemäßen Halteschienen ermöglichen es, auch bei der Verwendung des wirtschaftlich günstigeren Stabstahls Rohrleitungen zur Raumtemperierung schnell und mit einem gesicherten Verlegeabstand zu verlegen. Dies ist sowohl bei Betonwerken mit einem vollautomatischen Fertigungsprozess, als auch im Fall eines halbautomatischen oder gar manuellen Fertigungsprozesses möglich.

Weitere Vorteile, Merkmale und Einzelheiten der Erfindung ergeben sich aus den im Folgenden dargestellten Ausführungsbeispielen sowie anhand der Zeichnungen. Dabei zeigen:
- Fig. 1: ein nach einem nicht erfindungsgemäßen Verfahren hergestelltes Bauelement mit nach der Bewehrung eingebrachter Schiene vor dem Verguss mit Beton;
- Fig. 2: die beim Verfahren nach Fig. 1 verwendete Halteschiene;
- Fig. 3: ein nach einem weiteren nicht erfindungsgemäßen Verfahren hergestelltes Bauelement vor dem Verguss mit Beton;
- Fig. 4: die beim Verfahren nach Fig. 3 verwendete Halteschiene;
- Fig. 5: ein nach einem erfindungsgemäßen Verfahren mit auf der Schalung aufgestellter Schiene hergestelltes Bauelement vor dem Verguss mit Beton; und
- Fig. 6: die beim Verfahren nach Fig. 5 verwendete Halteschiene.

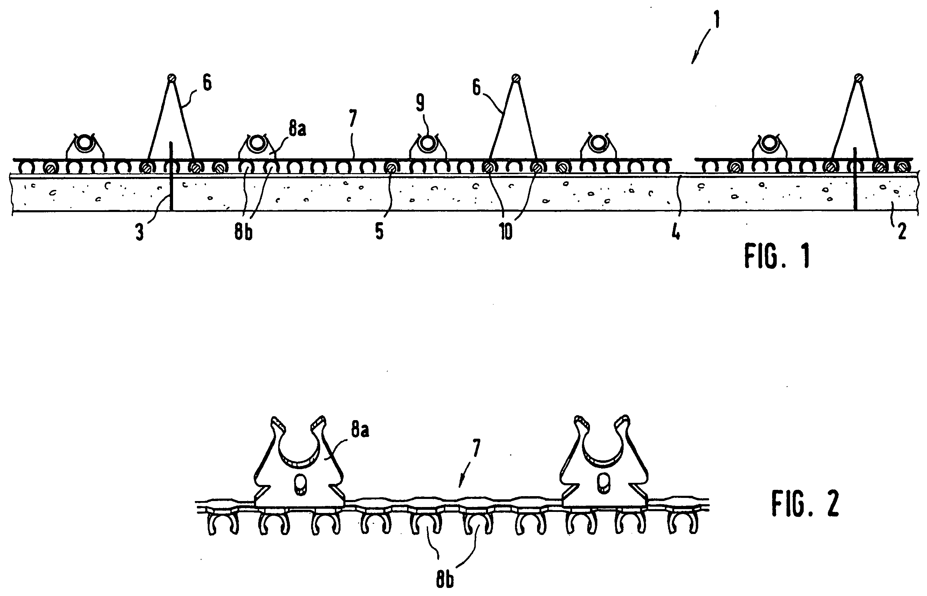

Fig. 1 stellt ein nach einem nicht erfindungsgemäßen Verfahren hergestelltes Bauelement 1 dar, bei dem die Halteschiene 7 nach der Bewehrung eingebracht wurde. Das Bauelement 1 wurde noch nicht mit Beton vergossen. Es umfasst eine Schalung 2, auf die Abstandshalter 3 für die Querbewehrung 4 aufgebracht worden sind. Senkrecht zur Querbewehrung 4 ist die Längsbewehrung 5 dargestellt, wobei diese statisch notwendige Bewehrung mittels Stabstahl manuell oder vollautomatisch in der Produktionspalette hergestellt wurde. Das anschließende Einbringen der Gitterträger 6 ist so erfolgt, dass deren Anordnung an die geplante Rohrverlegung angepasst ist. Die Halteschiene 7 weist auf ihrer Ober- und Unterseite Clipvorrichtungen 8a, 8b auf, die auf der Unterseite zum Einclipsen der Längsbewehrung 5 dienen, während auf der Oberseite die Rohrleitungen 9 eingeclipst werden. Außerdem dienen die Clipvorrichtungen 8b zum Einclipsen der Untergurte 10 der Gitterträger 6. Die Halteschienen 7, von denen beim vorliegenden Bauelement 1 zwei dargestellt sind, sind filigran aufgebaut, sodass der Verguss mit Beton nicht durch die Halteschienen behindert wird. Die Länge der Halteschienen 7 kann variieren, wobei eine Länge von etwa 1 Meter angemessen ist, um sowohl eine günstige Herstellung der Halteschienen 7 als auch ein leichtes Einfädeln in die Gitterträger 6 bei der Montage zu ermöglichen. Die Beabstandung der einzelnen Halteschienen 7 ist hier so gewählt, dass die parallelen Abschnitte der Rohrleitungen 9 in etwa äquidistant verlaufen.

Nach dem Verguss mit Beton kann das fertige Bauelement auf die Baustelle transportiert und dort montiert werden. Da bei diesem Bauelement die Querbewehrung 4, die Längsbewehrung 5 und die Gitterträger 6 direkt aufeinanderfolgend eingebracht werden, kann eine Herstellung in einem vollautomatischen Betonwerk erfolgen, wobei gleichzeitig ein gesicherter Verlegeabstand der Rohrleitung 9 gegeben ist.

In Fig. 2 ist die beim Verfahren nach Fig. 1 verwendete Halteschiene 7 dargestellt. Zu sehen sind die Clipvorrichtungen 8a auf der Oberseite der Halteschiene 7, die zur Aufnahme der Rohrleitungen 9 gedacht sind. Die Clipvorrichtungen 8b auf der Unterseite der Halteschiene 7 dienen zum Einclipsen der Längsbewehrung 5 und der Gitterträger 6. Die aus Kunststoff bestehende Halteschiene 7 ist filigran aufgebaut, sodass durch ihre Struktur der Verguss des Bauelements mit Beton nicht behindert wird.

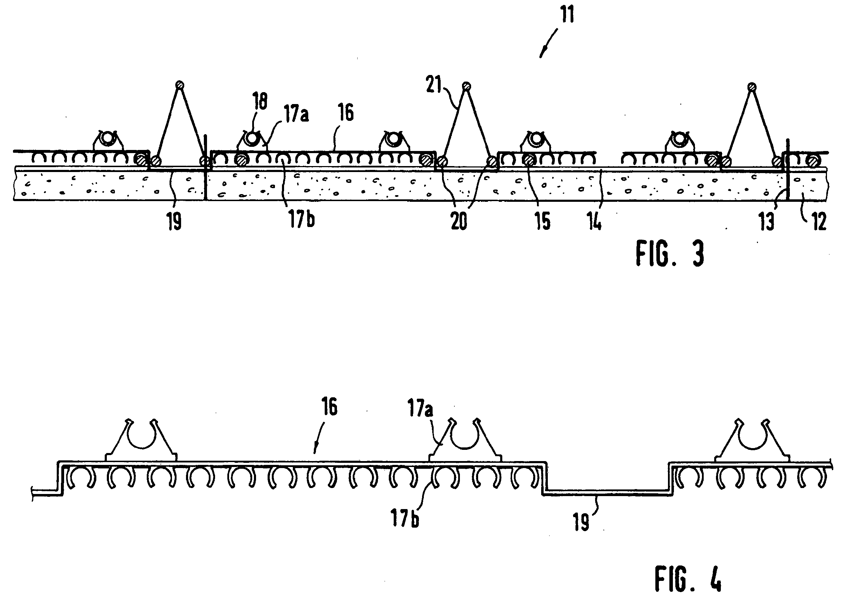

Fig. 3 zeigt ein nach einem weiteren nicht erfindungsgemäßen Verfahren hergestelltes Bauelement 11 vor dem Verguss mit Beton.

Das Bauelement 11 weist wiederum eine Schalung 12 sowie Abstandshalter 13 für die Querbewehrung 14 auf. Die Längsbewehrung 15 liegt senkrecht auf der Querbewehrung 14 auf.

Die hier verwendeten Halteschienen 16 weisen wiederum auf ihrer Oberseite Clipvorrichtungen 17a auf, die zur Aufnahme der Rohrleitungen 18 dienen. In die Clipvorrichtungen 17b auf der Unterseite der Halteschienen 16 sind die entsprechenden Abschnitte der Längsbewehrung 15 eingeclipst. Die Halteschienen 16 verfügen über Auflageflächen 19, die tiefer liegen als die sonstige Schienenfläche. Auf den Auflageflächen 19 werden die Untergurte 20 der nach den Halteschienen 16 eingebrachten Gitterträger 21 aufgestellt. Hier nicht dargestellt ist die insbesondere im Umlenkbereich der Rohrleitungen 18 erforderliche Fixierung der Rohrleitungen 18 an der statischen Bewehrung. Durch den Verlegeabstand der Halteschienen 16 ist ein solches Fixieren in der Längsrichtung, also den parallelen Abschnitten der Rohrleitungen 18 nur punktuell oder gar nicht erforderlich.

Das Einbringen der Halteschienen 16 vor dem Einbringen der Gitterträger 21 bietet sich insbesondere bei manuellen oder halbautomatischen Fertigungsprozessen im Betonwerk an. Erst auf der Baustelle erfolgt das Einbringen einer obere Bewehrung und im Anschluss daran der Verguss mit Beton.

Fig. 4 zeigt die beim Verfahren nach Fig. 3 verwendete Halteschiene 16. Die Clipvorrichtungen 17a auf der Oberseite der Halteschiene 16, die zur Aufnahme der Rohrleitungen 18 dienen, weisen größere Abstände auf als die Clipvorrichtungen 17b auf der Unterseite der Halteschiene 16. Durch die zahlreichen Clipvorrichtungen 17b auf der Unterseite der Schiene 16, in die die Längsbewehrung 15 eingeclipst werden kann, ist es beim Erstellen der Bewehrung noch nicht erforderlich, das spätere Einbringen der Halteschiene 16 bzw. der Rohrleitungen 18 zu berücksichtigen. Lediglich für das Einbringen der Gitterträger 21 auf den Auflageflächen 19 ergibt sich durch die Lage der Auflageflächen 19 eine Beschränkung. Die Gitterträger 21 werden angepasst an die geplante Rohrverlegung auf den Auflageflächen 19 aufgestellt, anschließend können die Rohrleitungen in die Clipvorrichtungen 17a auf der Oberseite der Halteschiene 16 eingeclipst werden.

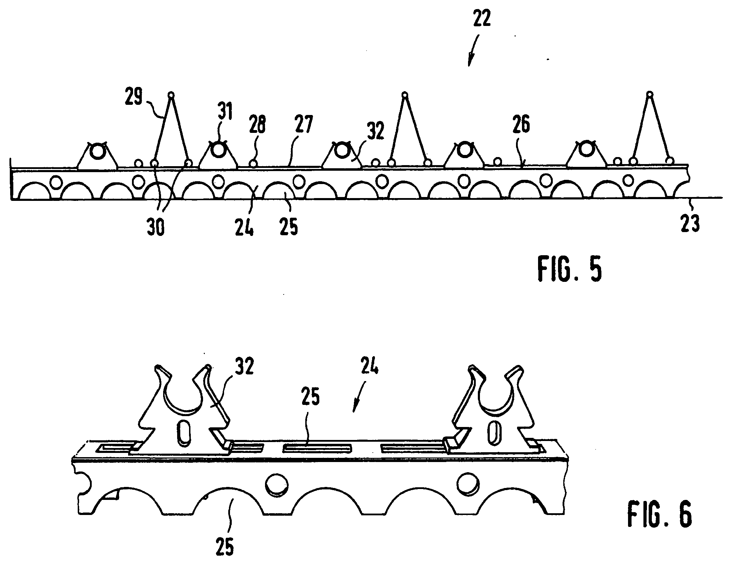

Fig. 5 stellt ein nach einem erfindungsgemäßen Verfahren mit auf der Schalung aufgestellter Schiene hergestelltes Bauelement 22 vor dem Verguss mit Beton dar. Die auf der Schalung 23 aufgestellte Halteschiene 24 weist in ihrer Längsrichtung Aussparungen 25 auf, damit der anschließende Verguss mit Beton nicht behindert wird.
Auf ihrer Oberseite sind Auflageflächen 26 zu sehen, auf denen die Querbewehrung 27 aufgelegt wird. Auf der Querbewehrung 27 liegt wiederum die Längsbewehrung 28 auf, daneben Gitterträger 29 mit ihren Untergurten 30. Die Gitterträger 29 können vor oder nach den Rohrleitungen 31 eingebracht werden, je nachdem, ob der Fertigungsprozess voll-, halbautomatisch oder manuell erfolgt. Die Rohrleitungen 31 werden in die Clipvorrichtungen 32 der Halteschiene 24 eingeclipst. Die Rohrverlegung kann schnell und wirtschaftlich realisiert werden.

Damit bei dem Verfahren, bei dem die Halteschiene 24 direkt auf der Schalung 23 aufgestellt wird, dennoch eine glatte Oberfläche des Bauelements entsteht, ist darauf zu achten, dass die Aussparungen 25 derart ausgebildet sind, dass die Halteschiene 24 mit sich zur Oberfläche hin verjüngenden Abschnitten auf der Schalung 23 aufsteht. Ein Verrücken der Schiene wird bei dieser Ausführung durch das Eigengewicht der statischen Bewehrung, die auf der Schiene 24 aufliegt, verhindert.

Fig. 6 stellt schließlich die beim Verfahren nach Fig. 5 verwendete Halteschiene 24 dar. Die Halteschiene 24 weist ein U-förmiges Profil auf, wobei in der Längsrichtung zahlreiche Aussparungen 25 vorliegen. Diese Aussparungen 25 können rund oder oval sein oder auch jede andere zweckmäßige Form annehmen. Auf der Oberseite der Halteschiene 24 befinden sich die Clipvorrichtungen 32 zur Aufnahme der Rohrleitungen 31. Diese Clipvorrichtungen 32 können angepasst an die gewünschte Rohrverlegung in Aussparungen 25 der Halteschiene 24 gehaltert sein. Durch das nachträgliche Haltern der Clipvorrichtungen 32 ist es möglich, die Halteschiene 24 für unterschiedliche Rohrverlegungsabstände zu verwenden. Die zahlreichen Aussparungen 25 ermöglichen ein problemloses Vergießen des Bauelements 22 mit Beton und dienen außerdem dazu zu verhindern, dass die Oberflächenstruktur des fertigen Bauelements 22 beeinträchtigt wird.

Mit dieser Halteschiene 24 wird das Bauelement 22 der Abbildung 5 hergestellt, auf die Baustelle transportiert und dort montiert. Anschließend kann das Aufbringen einer oberen Bewehrung und der Verguss des gesamten Bauelements 22 mit Beton erfolgen. Alternativ kann das Bauelement ohne obere Bewehrung und nicht aufbetoniert verwendet,

## Patentansprüche

1. Verfahren zur Herstellung eines vorgefertigten mit Stabstahl bewehrten Decken- oder Wandelements, mit einem Bauelement mit einer Stabstahlbewehrung, Rohrleitungen (31) zur Raumtemperierung und wenigstens einer aus Kunststoff bestehenden Halteschiene (24) zur Aufnahme der Rohrleitungen (31), wobei sich der Oberseite der Halteschiene (24) Clipvorrichtungen (32) zur Aufnahme der Rohrleitungen (31) befinden, umfassend die folgenden aufeinanderfolgenden Schritte:
- Erstellung der Stabstahlbewehrung,
- Befestigung der Halteschiene (24) an der Stabstahlbewehrung ,
- Einbringen und Halterung der Rohrleitungen (31) an der Halteschiene ( 24) und
- Verguss des Bauelements (22) mit Beton,
**dadurch gekennzeichnet dass**,
die Halteschiene (24) ein U-förmiges Profil aufweist, wobei in der Längsrichtung zahlreiche Aussparungen (25) vorliegen und die Clipvorrichtungen (32) zur Aufnahme der Rohrleitungen (31) angepasst an die gewünschte Rohrverlegung in Aussparungen (25) der Halteschiene (24) gehaltert sein können.

2. Verfahren nach Anspruch 1, **dadurch gekennzeichnet, dass** die Rohrleitungen (31) an der Halteschiene (24) clipgehaltert werden.

3. Verfahren nach einem der vorangehenden Ansprüche, **dadurch gekennzeichnet, dass** die Stabstahlbewehrung mit einer Längs- und einer Querbewehrung (27, 28) erstellt wird.

4. Verfahren nach einem der vorangehenden Ansprüche, **dadurch gekennzeichnet, dass** als Stabstahlbewehrung Gitterträger (29) verwendet werden.

5. Verfahren nach einem der Ansprüche 4 bis 5, **dadurch gekennzeichnet, dass** die Halteschiene (24) an der Längsbewehrung (28) und/oder an den Untergurten (30) der Gitterträger (29) gehaltert wird.

6. Verfahren nach einem der Ansprüche 3 bis 5, **dadurch gekennzeichnet, dass** die Halteschiene (24) senkrecht, zur Längsbewehrung (28) der Stabstahlbewehrung eingebracht wird.

7. Halteschiene (24), geeignet zur Verwendung bei einem Verfahren nach einem der Ansprüche 1 bis 6, wobei die aus Kunststoff bestehende Halteschiene (24) auf ihrer Oberseite Clipvorrichtungen (32) geeignet zur Halterung der Rohrleitungen (21) aufweist und, **dadurch gekennzeichnet, dass** die Halteschiene (24) ein U-förmiges Profil mit Aussparungen (25) in longitudinaler Richtung aufweist, wobei in der Längsrichtung zahlreiche Aussparungen (25) vorliegen und die Clipvorrichtungen (32) zur Aufnahme der Rohrleitungen (31) angepasst an die gewünschte Rohrverlegung in Aussparungen (25) der Halteschiene (24) gehaltert sein können.

## Claims

1. Method for producing a prefabricated ceiling or wall element reinforced with bar steel, using a construction element with a bar steel reinforcement, pipelines (31) for room temperature control and at least one holding rail (24) which consists of plastic and is intended for receiving the pipelines (31), wherein clip devices (32) for receiving the pipelines (31) are situated on the upper side of the holding rail (24), comprising the following successive steps:
- constructing the bar steel reinforcement,
- fastening the holding rail (24) to the bar steel reinforcement,
- fitting and holding the pipelines (31) on the holding rail (24) and
- casting the construction element (22) with concrete,
**characterized in that**
the holding rail (24) has a U-shaped profile, wherein numerous cutouts (25) are present in the longitudinal direction and the clip devices (32) for receiving the pipelines (31) can be held in cutouts (25) of the holding rail (24) in a manner adapted to the desired pipe laying.

2. Method according to Claim 1, **characterized in that** the pipelines (31) are held clipped to the holding rail (24).

3. Method according to either of the preceding claims, **characterized in that** the bar steel reinforcement is constructed with a longitudinal and a transverse reinforcement (27, 28).

4. Method according to one of the preceding claims, **characterized in that** lattice beams (29) are used as bar steel reinforcement.

5. Method according to either of Claims 4 and 5, **characterized in that** the holding rail (24) is held on the longitudinal reinforcement (28) and/or on the lower flanges (30) of the lattice beams (29).

6. Method according to one of Claims 3 to 5, **characterized in that** the holding rail (24) is introduced perpendicularly to the longitudinal reinforcement (28) of the bar steel reinforcement.

7. Holding rail (24) suitable for use in a method according to one of Claims 1 to 6, wherein the holding rail (24) consisting of plastic has on its upper side clip devices (32) suitable for holding the pipelines (21), **characterized in that** the holding rail (24) has a U-shaped profile with cutouts (25) in the longitudinal direction, wherein numerous cutouts (25) are present in the longitudinal direction and the clip devices (32) for receiving the pipelines (31) can be held in cutouts (25) of the holding rail (24) in a manner adapted to the desired pipe laying.

## Revendications

1. Procédé de fabrication d'un élément de plafond ou de paroi préfabriqué renforcé par des barres en acier, comprenant un élément de construction avec des barres d'acier de renforcement, des conduites tubulaires (31) pour la régulation de la température et au moins un rail de fixation (24) se composant de plastique pour recevoir les conduites tubulaires (31), des dispositifs d'enclipsage (32) pour recevoir les conduites tubulaires (31) se trouvant sur le côté supérieur du rail de fixation (24), comprenant les étapes successives suivantes :
- création des barres d'acier de renforcement,
- fixation du rail de fixation (24) sur les barres d'acier de renforcement,
- introduction et fixation des conduites tubulaires (31) sur le rail de fixation (24) et
- coulage de l'élément de construction (22) avec du béton,
**caractérisé en ce que**
le rail de fixation (24) présente un profilé en forme de U, une pluralité d'évidements (25) étant réalisée dans la direction longitudinale et les dispositifs d'enclipsage (32) pour recevoir les conduites tubulaires (31) pouvant être fixés dans des évidements (25) du rail de fixation (24) de manière adaptée à la pose souhaitée des tubes.

2. Procédé selon la revendication 1, **caractérisé en ce que** les conduites tubulaires (31) sont fixées par des clips au rail de fixation (24).

3. Procédé selon l'une quelconque des revendications précédentes, **caractérisé en ce que** les barres en acier de renforcement sont fabriquées avec un renforcement longitudinal et un renforcement transversal (27, 28).

4. Procédé selon l'une quelconque des revendications précédentes, **caractérisé en ce que** l'on utilise comme barres d'acier de renforcement des supports en treillis (29).

5. Procédé selon l'une quelconque des revendications 4 à 5, **caractérisé en ce que** le rail de fixation (24) est fixé au renforcement longitudinal (28) et/ou aux membrures inférieures (30) des supports en treillis (29).

6. Procédé selon l'une quelconque des revendications 3 à 5, **caractérisé en ce que** le rail de fixation (24) est introduit perpendiculairement au renforcement longitudinal (28) des barres en acier de renforcement.

7. Rail de fixation (24), prévu pour être utilisé dans un procédé selon l'une quelconque des revendications 1 à 6, le rail de fixation (24) se composant de plastique présentant sur son côté supérieur des dispositifs d'enclipsage (32) prévus pour la fixation des conduites tubulaires (21) et **caractérisé en ce que** le rail de fixation (24) présente un profilé en forme de U avec des évidements (25) dans la direction longitudinale, une pluralité d'évidements (25) étant réalisée dans la direction longitudinale et les dispositifs d'enclipsage (32) pour recevoir les conduites tubulaires (31) pouvant être fixés dans des évidements (25) du rail de fixation (24) de manière adaptée à la pose souhaitée des tubes.
